# EUROPÄISCHE PATENTSCHRIFT

(11) **EP 3 099 698 B1**
(45) Veröffentlichungstag und Bekanntmachung des Hinweises auf die Patenterteilung: **13.09.2017**
(21) Anmeldenummer: 15702206.2
(22) Anmeldetag: 26.01.2015
(51) Int. Cl.: C07F 7/18, C08G 18/80, C08G 18/00, C08G 18/73, C08G 18/76, C08G 18/10, C08G 18/12, C09D 175/04, C08G 18/78, C08G 18/28, C09D 183/16, C08G 18/48, C09J 183/16

(54) **SILANMODIFIZIERTE FORMAMIDE**
SILANE-MODIFIED FORMAMIDES
FORMAMIDES MODIFIÉS PAR UN SILANE

(30) Priorität: 31.01.2014 EP 14153501
(43) Veröffentlichungstag der Anmeldung: 07.12.2016
(73) Patentinhaber: Covestro Deutschland AG, 51373 Leverkusen (DE)
(72) Erfinder: EGGERT, Christoph, 50733 Köln (DE)
(74) Vertreter: Levpat
(86) Internationale Anmeldenummer: PCT/EP2015/051439
(87) Internationale Veröffentlichungsnummer: WO 2015/113919

(56) Entgegenhaltungen:
- DATABASE CA [Online] CHEMICAL ABSTRACTS SERVICE, COLUMBUS, OHIO, US; 1987, DESCHLER, ULRICH ET AL: "Preparation of N-silylpropyl-N'-acylureas as intermediates for isocyanates", XP002722670, gefunden im STN Database accession no. 1987:102544 & DE 35 24 215 A1 (DEGUSSA A.-G., FED. REP. GER.) 8. Januar 1987 (1987-01-08)

## Beschreibung

### Technisches Gebiet der Erfindung

Die vorliegende Erfindung betrifft neue silanmodifizierte Formamid-Prepolymere der Formel (I) zur Beschichtung, Verklebung und/oder Abdichtung von diversen Substratmaterialien, wie z.B. Metall, Holz, Glas und/oder Kunststoff. Außerdem wird ein reaktives Einkomponenten-Klebstoffsystem, umfassend die erfindungsgemäßen, silanmodifizierten Formamid-Prepolymere der Formel (I) zur Verfügung gestellt.

### Hintergrund der Erfindung

Silanmodifizierte Polymere sind allgemein seit Jahren bekannt und Dicht- bzw. Klebstoffe, die auf silanmodifizierten Prepolymeren bzw. Polymeren basieren, haben sich für verschiedenste Anwendungen, zum Beispiel bei Nahtabdichtungen im Fahrzeugbau, bei Fenstern oder im Fassadenbau, bewährt.

Ganz allgemein versteht man unter silanmodifizierten Polymeren (die vor der Verarbeitung als Prepolymere vorliegen) Polymere, die Silangruppen mit hydrolysierbaren Resten enthalten und deren Polymerrückgrat nicht im Wesentlichen aus O-Si-O-Si-Ketten aufgebaut wird, wie das bei den Silikonen der Fall ist, sondern aus C-C-Ketten, die in den meisten Fällen durch Heteroatome unterbrochen sind und weiter Urethan-, Ether-, Ester-, Harnstoff-, Amid- und andere Struktureinheiten enthalten. Unter Feuchtigkeitseinwirkung werden die Reste an den Silangruppen, zum Beispiel üblicherweise Acetat- oder Alkoxy-Gruppen, hydrolysiert, wobei reaktive Silanole entstehen, die im Anschluss unter Wasser-, Alkohol- oder Essigsäureabspaltung zu einem hochmolekularen Netzwerk kondensieren und aushärten.

Der Wert dieser silanmodifizierten Polymere liegt im Wesentlichen in ihrem besonderen Eigenschaftsprofil. Denn zum einen zeichnen sich Beschichtungs-, Kleb- oder Dichtstoffe, die silanmodifizierte Polymere enthalten, durch eine hohe Haftung auf unterschiedlichsten Substraten ohne auf wändige Vorbehandlung (kein Primer notwendig) aus. Dies liegt daran, dass auf anorganischen Substratoberflächen normalerweise OH-Gruppen vorhanden sind, die mit den reaktiven Silanolen des Polymers, die unter Einwirkung von Feuchtigkeit entstehen, reagieren können. Zum anderen können mit Hilfe des Polymerrückgrats die Eigenschaften der silanmodifizierten Polymere an eine Vielzahl verschiedenster Anwendungen angepasst werden.

So basieren die derzeit auf dem Markt kommerziell erhältlichen, silanmodifizierten Polurethane und Polyharnstoffe auf einem hochmolekularen Rückgrat, das (i) durch Umsetzung von NCOhaltigen Prepolymeren mit Aminosilanen oder (ii) durch Umsetzung von OH-terminierten Prepolymeren, wie zum Beispiel Polyethern, Polyurethanen oder Polyestern, mit NCO-funktionellen Silanen erzeugt wird, wie in folgendem Formelschema gezeigt wird:
i) 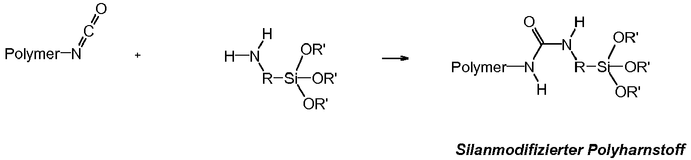
ii)

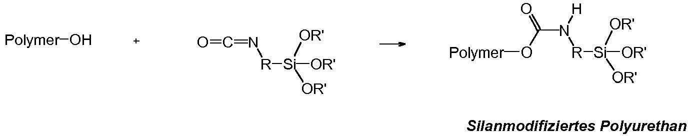

Ein Nachteil von Beschichtungs-, Kleb- und Dichtstoffen, die auf silanmodifizierten Polyharnstoffen basieren, liegt aber in der hohen Viskosität ihrer Prepolymere. Aufgrund der hohen Viskosität ist die Anwendung silanmodifizierter Polyharnstoffe nur eingeschränkt möglich, da die einzusetzenden Beschichtungs- bzw. Dichtstoffe normalerweise flüssig bis pastös auf die zu beschichtenden bzw. verklebenden Substratteile aufgetragen werden müssen. Ein zu viskoses Prepolymer erschwert oder verunmöglicht folglich die Verwendung als Beschichtungs-, Kleb- und/oder Dichtstoff.

Aus der DE 35 24 215 A1 sind N-Silylpropyl-N'-acylurethane und ihre Verwendung als als Haftvermittler in Stoffsystemen bekannt. Der Unterschied zum Gegenstand der vorliegenden Erfindung besteht in der Struktur der Verbindungen, d.h. der Struktureinheit "-NHC(O)N(Me)CHO" in CAS RN "106-996-26-3" im Vergleich zu der Struktureinheit "-N(CHO)C(O)N(H)Y" in der Verbindung der Formel (I) gemäß der vorliegenden Erfindung. In der genannten Publikation wird weder vorgeschlagen noch nahegelegt, eine Struktureinheit der Formel "-N(CHO)C(O)N(H)Y" in einer in dieser Publikation genannten Verbindung einzuführen.

Weiterhin ist der Härtegrad der entstehenden Beschichtung, Verklebung und/oder Dichtung als Endprodukt nach der Silan-Vernetzung für die jeweilige Anwendung entscheidend. Bei silanmodifizierten Polyharnstoffen liegen normalerweise Endprodukte mit einem hohen Härtegrad vor. Im Gegensatz dazu stellen silanmodifizierte Polyurethane nach der Aushärtung weichere Endprodukte zur Verfügung. Allerdings ist die Synthese silanmodifizierter Polyurethane mit hohem Silangehalt aufgrund der relativ teuren NCO-funktionalisierten Silan-Vorläufer wirtschaftlich schwierig umzusetzen.

In diesem Zusammenhang spielt außerdem der monomere NCO-Gehalt in silanmodifizierten Polymeren eine entscheidende Rolle: aufgrund des nicht zu vernachlässigenden Dampfdrucks der Isocyanate (bereits bei Raumtemperatur) können bei einem Sprühauftrag bereits Isocyanat-Dämpfe auftreten, die gesundheitsschädlich oder zumindest sensibilisierend sein können. Folglich ist die Entwicklung von reaktiven Prepolymeren, die im Wesentlichen frei von Isocyanat-Monomeren sind, und jedenfalls unter dem Expositionsleitwert (Total Reactive Isocyanate Group concentration TRIG) gemäß der technischen Regel für Gefahrstoffe (TRGS) 430 (Ausg. 3/2009) von 0,018 mg/m³ NCO liegen, vorzugsweise unterhalb von 0,01 mg/m³, besonders bevorzugt unterhalb 0,001 mg/m³, wünschenswert.

### Aufgabe der vorliegenden Erfindung

Der vorliegenden Erfindung liegt insofern die Aufgabe zugrunde, alternative silanmodifizierte Formamid-Prepolymere bereitzustellen, sowie Verfahren zur Herstellung solcher Verbindungen, deren Verwendung sowie reaktive Einkomponenten-Klebstoffbeschichtungssysteme, umfassend solche Verbindungen. Ferner die Verwendung solcher Einkomponenten-Klebstoffbeschichtungssysteme als reaktive Einkomponenten-Klebstoffsysteme, die solche Verbindung umfassen, sowie die Verwendung eines solchen reaktiven Einkomponenten-Klebstoffsystems in einem Kit und einem Verbundkörper, der durch ein solches Einkomponenten-Klebstoffsystem oder Kit verbunden ist. Diese Aufgabe wurde durch die Verbindungen, Verfahren, Verwendungen, Systeme, Verbundkörper und Kits entsprechend der Ansprüche 1-13 gelöst.

Insbesondere wird ein reaktives Einkomponenten-Klebstoffsystem bereitgestellt, das aufgrund einer niedrigeren Viskosität und geringeren Kristallinität einfacher zu handhaben ist und das gleichzeitig eine hohe chemische Stabilität der Endprodukte ermöglicht. Angestrebt werden ferner kostengünstig herstellbare polymere Endprodukte mit einer vorteilhaften Balance von Eigenschaften, wie insbesondere Aushärtungsgrad und chemischer Stabilität.

### Zusammenfassung der Erfindung

Die vorliegende Erfindung betrifft Verbindungen der Formel (I) gemäß Patentanspruch 1, die als Einkomponenten-Klebstoffsystem/Beschichtungssystem zur verbesserten Beschichtung, Verklebung und/oder Abdichtung diverser Substratmaterialien, wie z.B. Metall, Holz, Glas und/oder Kunststoff, geeignet sind.

Im endgültig ausgehärteten Zustand stellt die Erfindung über -Si-O-Si-Brücken kondensierte Polymere als dauerhafte Beschichtungen, Kleb- und/oder Dichtstoffe zur Verfügung.

Weiterhin stellt die vorliegende Erfindung Verfahren zur Herstellung der Verbindungen der Formel (I) zur Verfügung.

### Ausführliche Beschreibung der Erfindung

Erfindungsgemäß werden Verbindungen der Formel (I) bereitgestellt: 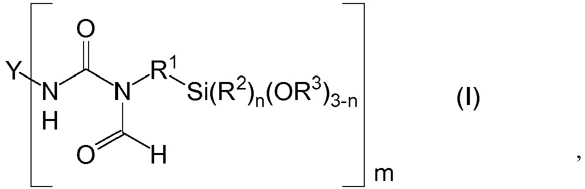 wobei in der Formel (I) gilt:
Y stellt einen m-wertigen Molekülrest dar, der eine um m NCO-Radikale reduzierte Struktureinheit eines Monoisocyanats (m=1), Polyisocyanats (m>1) oder eines isocyanatgruppenhaltigen Prepolymers (m=1 bis 20) ist;
R¹ stellt eine mindestens zweiwertige, gegebenenfalls substituierte, lineare oder verzweigte, aliphatische, alizyklische, araliphatische und/oder aromatische Struktureinheit mit 1 bis 12 Kohlenstoffatomen dar, wobei ein oder mehrere nicht benachbarte Methylengruppen jeweils durch O oder S ersetzt sein können;
R² und R³ stellen jeweils unabhängig voneinander eine gegebenenfalls substituierte, lineare oder verzweigte, aliphatische Gruppe mit 1 bis 12 Kohlenstoffatomen dar;
n stellt eine ganze Zahl von 0 bis 2 dar; und
m stellt eine Zahl von 1 bis 20 dar.

In einer erfindungsgemäßen Ausführungsform werden folglich Verbindungen der Formel (I) bereitgestellt.

In einer weiteren erfindungsgemäßen Ausführungsform wird ein Verfahren zur Herstellung der Verbindung der Formel (I) zur Verfügung gestellt, umfassend Umsetzung des silanmodifizierten Formamids der Formel (Ia) mit dem Isocyanat der Formel Y-(NCO)ₘ: 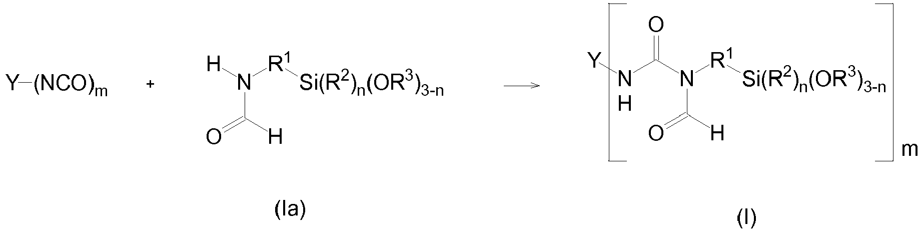 wobei Y, R¹, R², R³, n und m wie in Anspruch 1 definiert sind.

In einer weiteren erfindungsgemäßen Ausführungsform wird ein reaktives, einkomponentiges Klebstoff- und/oder Beschichtungssystem, umfassend mindestens eine Verbindung der Formel (I), zur Verfügung gestellt.

Erfindungsgemäß wird die Verbindung der Formel (I) zur Herstellung von Kleb- und Dichtstoffen, Lacken, Beschichtungen, Schlichten, Tinten und/oder Druckerfarben verwendet.

In einer weiteren erfindungsgemäßen Ausführungsform wird die Verwendung des erfindungsgemäßen, reaktiven Einkomponenten-Klebstoffsystems zur Verklebung und/oder Abdichtung von Metall, Holz, Holzwerkstoffen, Glas, Leder, Textilien, Kunststoffen, mineralischen Materialien, Kork, Fasern, Beton, Papier, Pappe und Folien beschrieben.

Zudem wird erfindungsgemäß ein Verbundkörper offenbart, der durch das erfindungsgemäße Einkomponenten-Klebstoffsystem verbunden wird.

### Definitionen

Wie in dieser Anmeldung verwendet, soll der Begriff "alizyklisch" für carbozyklische oder heterozyklische Verbindungen stehen, die nicht zu den aromatischen Verbindungen gehören, wie beispielsweise Zykloalkane, Zykloalkene oder Oxa-, Thia-, Aza- oder Thiazazykloalkane. Spezielle Beispiele hierfür sind Cyclohexylgruppen, Cyclopentylgruppen, sowie deren durch ein oder zwei N- oder O-Atome unterbrochene Derivate wie z.B. Pyrimidin, Pyrazin, Tetrahydropyran oder Tetrahydrofuran.

Wie in dieser Anmeldung verwendet, soll der Begriff "araliphatisch" für durch Aryl-Gruppen substituierte Alkylreste stehen, wie z. B. Benzyl, Phenylethyl-, Biphenyl-, etc.
Wie in dieser Anmeldung verwendet, soll der Begriff "gegebenenfalls substituiert" bzw. "substituiert" insbesondere für eine Substitution der relevanten Struktureinheit durch -F, -Cl, -I, -Br, -OH, -OCH₃, -OCH₂CH₃, -O-nPropyl oder-O-Isopropyl, -OCF₃, -CF₃, -S-C₁₋₆-Alkyl und/oder eine andere, ggf. über ein Heteroatom verknüpfte lineare oder verzweigte, aliphatische, alizyklische, araliphatische und/oder aromatische Struktureinheit mit 1 bis 12 Kohlenstoffatomen stehen. Vorzugsweise steht er für eine Substitution durch Halogen (insbesondere -F, -Cl), C₁₋₆-Alkoxy (insbesondere Methoxy und Ethoxy), Hydroxy, Trifluormethyl und Trifluormethoxy.

Wie in dieser Anmeldung verwendet, soll der Begriff "niedermolekular" für Verbindungen stehen, deren Molekülmasse etwa 800 g·mol⁻¹ nicht übersteigt.

Wie in dieser Anmeldung verwendet, soll der Begriff "hochmolekular" für Verbindungen stehen, deren Molekülmasse etwa 800 g·mol⁻¹ übersteigt.

Unter Molekülmasse ist bei Verbindungen, deren Molekülmasse sich nicht aus einer exakt definierten Strukturformel ergibt, wie z.B. bei Polymeren, jeweils das Molekulargewichtszahlenmittel zu verstehen.

Wie in dieser Anmeldung verwendet, soll der Begriff "Monoisocyanat" für eine Verbindung stehen, die durch A-NCO dargestellt wird, wobei A eine aromatische, araliphatische, aliphatische oder cycloaliphatische Gruppe mit 6 bis 50 Kohlenstoffatome darstellt.

Wie in dieser Anmeldung verwendet, soll der Begriff "Polyisocyanat" für aromatische, araliphatische, aliphatische oder cycloaliphatische Polyisocyanate einer NCO-Funktionalität von bevorzugt > 2 stehen, inbesondere Di- und Triisocyanate.

Wie in dieser Anmeldung verwendet, soll der Begriff "Monomer" für eine niedermolekulare Verbindung mit funktionellen Gruppen stehen, die am Aufbau von Oligomeren und/oder (Pre-)Polymeren beteiligt ist und eine definierte Molmasse besitzt.

Wie in dieser Anmeldung verwendet, soll der Begriff "Oligomer" für eine Verbindung stehen, in der nur wenige Monomere gleicher oder verschiedener Art wiederholt miteinander verknüpft sind.

Wie in dieser Anmeldung verwendet, soll der Begriff "Prepolymer" für oligomere Verbindungen mit funktionellen Gruppen stehen, die am Endaufbau von Polymeren beteiligt sind.
Wie in dieser Anmeldung verwendet, soll der Begriff "Polymer" für hochmolekulare Verbindungen stehen, in denen Monomere, Oligomere und/oder Prepolymere gleicher oder verschiedener Art wiederholt miteinander verknüpft sind und die sich hinsichtlich Polymerisationsgrad, Molmassenverteilung bzw. Kettenlänge unterscheiden können.

### Erfindungsgemäße Ausführungsformen

Nachfolgend werden erfindungsgemäße Ausführungsformen im Detail beschrieben.

### Verbindungen der Formel (I)

In einer Ausführungsform werden die Verbindungen der allgemeinen Formel (I) bereitgestellt: 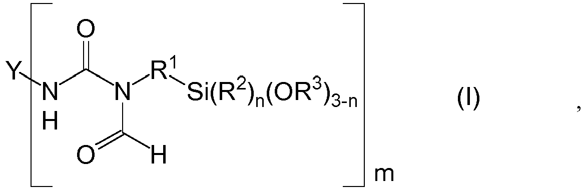 wobei in der Formel (I) gilt:
Y stellt einen m-wertigen Molekülrest dar, der eine um m NCO-Radikale reduzierte Struktureinheit eines Monoisocyanats (m=1), Polyisocyanats (m>1) oder eines isocyanatgruppenhaltigen Prepolymers (m≥1) ist;
R¹ stellt eine mindestens zweiwertige, gegebenenfalls substituierte, lineare oder verzweigte, aliphatische, alizyklische, araliphatische und/oder aromatische Struktureinheit mit 1 bis 12 Kohlenstoffatomen dar, wobei ein oder mehrere nicht benachbarte Methylengruppen jeweils durch O oder S ersetzt sein können;
R² und R³ stellen jeweils unabhängig voneinander eine gegebenenfalls substituierte, lineare oder verzweigte, aliphatische Gruppe mit 1 bis 12 Kohlenstoffatomen dar;
n stellt eine ganze Zahl von 0 bis 2 dar; und
m stellt eine Zahl von 1 bis 20 dar, wobei m auch ein Bruch sein kann.

In einer erfindungsgemäßen Ausführungsform handelt es sich bei der Struktureinheit Y, um einen Rest, der sich von einem Monoisocyanat ableitet. Beispiele für solche Monoisocyanate sind Hexylisocyanat, 6-Chlor-hexylisocyanat, n-Octylisocyanat, Cyclohexylisocyanat, 2-Ethylhexylisocyanat, 2,3,4-Methylcyclohexylisocyanat, 3,3,5-Trimethylcyclohexylisocyanat, 2-Norbornyl-methylisocyanat, Decylisocyanat, Dodecylisocyanat, Tetradecylisocyanat, Hexadecylisocyanat, Octadecylisocyanat, 3-Butoxypropylisocyanat, 3-(2-Ethylhexyloxy)-propylisocyanat, Phenylisocyanat, Tolylisocyanate, Chlorphenylisocyanate (2,3,4-Isomere), Dichlorphenylisocyanate, 4-Nitrophenylisocyanat, 3-Trifluormethylphenylisocyanat, Benzylisocyanat, Dimethylphenylisocyanate (techn. Gemisch und Einzelisomere), 4-Dodecylphenylisocyanat, 4-Cyclohexylphenylisocyanat, 1-Naphthylisocyanat, Isocyanato-Amide aus 1 Mol Diisocyanaten und 1 Mol Monocarbonsäuren, vorzugsweise aus Toluylendüsocyanaten, Diphenylmethandüsocyanaten und Hexamethylendiisocyanat mit aliphatischen Monocarbonsäuren mit bevorzugt mindestens 6 C-Atomen, z.B. (6-Isocyanato-hexyl)-stearinsäureamid, (3-Isocyanatotolyl)-stearinsäureamid, (6-Isocyanatohexyl)-benzamid, jeweils allein oder im Gemisch mit mehreren Monoisocyanaten.

In einer weiteren erfindungsgemäßen Ausführungsform handelt es sich bei der Struktureinheit Y, um einen Rest, der sich von einem Polyisocyanat ableitet. Als geeignete Polyisocyanate finden die dem Fachmann an sich bekannten aromatischen, araliphatischen, aliphatischen oder cycloaliphatischen Polyisocyanate einer NCO-Funktionalität von bevorzugt ≥ 2 Verwendung. Diese können auch Iminooxadiazindion-, Isocyanurat-, Uretdion-, Urethan-, Allophanat-, Biuret-, Harnstoff-, Oxadiazintrion, Oxazolidinon-, Acylharnstoff- und/oder Carbodiimid-Strukturen aufweisen.

Die vorstehend genannten Polyisocyanate basieren dabei auf dem Fachmann an sich bekannten Di- bzw. Triisocyanate mit aliphatisch, cycloaliphatisch, araliphatisch und/oder aromatisch gebundenen Isocyanatgruppen, wobei es unerheblich ist, ob diese unter Verwendung von Phosgen oder nach phosgenfreien Verfahren hergestellt wurden. Beispiele für solche Di- bzw. Triisocyanate sind 1,4-Diisocyanatobutan, 1,5-Diisocyanatopentan, 1,6-Diisocyanatohexan (HDI), 2-Methyl-1,5-diisocyanatopentan, l,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclo-hexan (Isophorondiisocyanat, IPDI), 4,4'-Diisocyanatodicyclohexylmethan (Desmodur® W, Bayer AG, Leverkusen, DE), 4-Isocyanatomethyl-1,8-octandiisocyanat (Trüsocyanatononan, TIN), Diiso-cyanato-1,3-dimethylcyclohexan (H6XDI), 1-Isocyanato-1-methyl-3-isocyanatomethylcyclohexan, 1- Isocyanato-1-methyl-4- isocyanatomethylcyclohexan, Bis-(isocyanatomethyl)- norbornan, 1,5-Naphthalendiisocyanat, 1,3- und 1,4-Bis-(2-isocyanato-prop-2-yl)-benzol (TMXDI), 2,4- und 2,6-Diisocyanatotoluol (TDI) insbesondere das 2,4 und das 2,6-Isomere und technische Gemische der beiden Isomeren, 2,4'- und 4,4'-Diisocyanatodiphenylmethan (MDI), 1,5-Diisocyanatonaphthalin, 1,3-Bis(isocyanatomethyl)benzol (XDI) sowie beliebige Mischungen genannter Verbindungen.

Besonders bevorzugt weisen die Polyisocyanate dabei eine mittlere NCO-Funktionalität von 2,0 bis 5,0, ganz besonders bevorzugt von 2,3 bis 4,5 und bevorzugt einen Gehalt an Isocyanatgruppen von 5,0 bis 27,0 Gew.-%, besonders bevorzugt von 14,0 bis 24,0 Gew.-% und vorzugsweise einen Gehalt an monomeren Diisocyanaten von weniger als 1 Gew.-%, besonders bevorzugt weniger als 0,5 Gew.-% auf.

Bevorzugt werden Polyisocyanate oder Polyisocyanatgemische der vorstehend genannten Art mit ausschließlich aliphatisch und/oder cycloaliphatisch gebundenen Isocyanatgruppen eingesetzt.

Besonders bevorzugt basieren die Polyisocyanate der vorstehend genannten Art auf Hexamethylendiisocyanat, Isophorondiisocyanat, den isomeren Bis-(4,4'-isocyanatocyclohexyl)methanen, TDI, MDI, sowie deren Mischungen.

In einer weiteren erfindungsgemäßen Ausführungsform handelt es sich bei der Struktureinheit Y, um einen Rest, der sich von einem Isocyanatgruppen tragenden Prepolymer ableitet. Dies kann insbesondere ein Polyurethanprepolymer sein. Die erfindungsgemäße Herstellung des Isocyanatgruppen tragenden Polyurethanprepolymer Y-(NCO)ₘ beinhaltet die Umsetzung von:
einem oder mehrerer bereits genannter Polyisocyanate
   mit
einem oder mehrerer Polyole.

Als geeignete Polyole können alle dem Fachmann aus der Polyurethanchemie an sich bekannten Polyole eingesetzt werden, welche bevorzugt eine mittlere OH-Funktionalität ≥ 1,5, besonders bevorzugt von 1,8 bis 2,5 aufweisen.

Dies können beispielsweise niedermolekulare Diole (z.B. 1,2-Ethandiol, 1,3- bzw. 1,2-Propandiol, 1,4-Butandiol, 2,2,4-Trimethylpentandiol), Triole (z.B. Glycerin, Trimethylolpropan) und Tetraole (z.B. Pentaerythrit), Polyetherpolyole, Polyesterpolyole, Polyacrylatpolyole sowie Polycarbonatpolyole sein. Bevorzugte Polyole sind Substanzen der vorstehend genannten Art auf Polyetherbasis.

Bei Verwendung von Polyetherpolyolen werden Polyetherpolyole eines zahlenmittleren Molekulargewichte Mn von bevorzugt 300 bis 20000 g/mol, besonders bevorzugt 1000 bis 12000 g/mol, ganz besonders bevorzugt 2000 bis 6000 g/mol eingesetzt.

Ferner besitzen sie bevorzugt eine mittlere OH-Funktionalität von ≥ 1,9, besonders bevorzugt > 1,95.

Die OH-Funktionalität dieser Polyether ist dabei bevorzugt < 6, besonders bevorzugt < 4, ganz besonders bevorzugt < 2,2.

Ebenfalls geeignete Polyole sind Polyesterpolyole aus der Kondensationsreaktion geeigneter Alkohole und Säuren. Als Alkohole finden hier primäre und diprimäre Diole, wie Ethylenglycol, Diethylenglycol, Triethylenglycol, 1,2-Propylenglycol, Dipropylenglycol, 1,3-Butandiol, 1,4-Butandiol, 1,6-Hexandiol oder Neopentylglycol, sowie höherwertige Alkohole, wie Trimethylolpropan, Trimethylolethan oder Pentaerythrit Anwendung. Geeignete Kondensationspartner sind Säurekomponenten wie die Adipinsäure oder die Phthalsäuren. Auch die ringöffnende Polymerisation von ε-Caprolacton oder Methyl-ε-Caprolacton unter Verwendung von Metall-Katalysatoren wie z.B. Sn-II-ethylhexanoat oder Titantetraalkoxylaten und Diolen oder Triolen der oben genannten Art als Startern führt zu geeigneten Polyesterpolyolen. Dabei kann die Länge des Polyesterpolyols durch die Zahl der verwendeten Caprolacton-Einheiten bestimmt werden.

Das bevorzugte Molekulargewicht der Polyesterpolyole (Zahlenmittel) beträgt ≤ 1000 g/mol. Die bevorzugte Funktionalität der Polyesterpolyole beträgt 2 bis 3.

Auch Polyacrylatpolyole sind für die Herstellung der erfindungsgemäßen Prepolymere geeignet. Die Polyacrylatpolyole haben ein zahlenmittleres Molekulargewicht von 200 bis 10000 g/mol, besonders bevorzugt 200 bis 6000 g/mol und ganz besonders bevorzugt von 200 bis 2500 g/mol. Die Funktionalität der eingesetzten Polyacrylatpolyole beträgt bevorzugt 1,6 bis 3,8, besonders bevorzugt 1,8 bis 3,5. Die OH Zahl dieser Polyacrylatpolyole beträgt bevorzugt 15 bis 150, besonders bevorzugt 20 bis 100 und ganz besonders bevorzugt 40 bis 80 mg KOH/g. Geeignet sind z.B. Acryflow^{®} P60 und P90 (Handelsprodukte der Fa. Lyondell, US).

Auch aliphatische Polycarbonatpolyole kommen zum Aufbau der erfindungsgemäßen Prepolymere in Betracht. Polycarbonatpolyole können bekanntlich aus der Kondensationsreaktion von Phosgen mit Polyolen oder der Umesterung geeigneter organischer Carbonate mit Polyolen erhalten werden. Als organische Carbonate kommen Aryl- Alkyl- Alkylencarbonate und deren Mischungen in Betracht. Als Beispiele seien Diphenylcarbonat (DPC), Dimethylcarbonat (DMC), Diethylcarbonat (DEC) und Ethylencarbonat genannt. Als Polyole kommem die oben unter dem Abschnitt Polyesterpolyole genannten in Betracht. Die Funktionalität der eingesetzten Polycarbonatpolyole beträgt bevorzugt 1,6 bis 3,8, besonders bevorzugt 1,8 bis 3,5. Diese Polycarbonatpolyole haben ein zahlenmittleres Molgewicht von bevorzugt 100 bis 6000 g/mol und besonders bevorzugt von 100 bis 4000 g/mol. Die OH-Zahl ist von der Funktionalität der Polycarbonatpolyole abhängig und beträgt typischerweise 20 bis 900 mg KOH/g.

Weitere geeignete Polyole sind beispielsweise auch die in EP-A 0 689 556 und EP-A 0 937 110 beschriebenen, z. B. durch Umsetzung epoxidierter Fettsäureester mit aliphatischen oder aromatischen Polyolen unter Epoxidringöffung erhältlichen speziellen Polyole.

Hydroxylgruppen enthaltende Polybutadiene können ebenfalls als Polyole dienen.

Die Herstellung der erfindungsgemäßen Polyurethanprepolymere Y-(NCO)ₘ erfolgt grundsätzlich in aus der Polyurethanchemie bekannter Art und Weise. Dabei werden die Polyole (einzeln oder als Mischung) mit einem Überschuß des Polyisocyanats (einzeln oder als Mischung) gegebenenfalls in Anwesenheit eines Katalysators und/oder von Hilfs- und Zusatzstoffen umgesetzt. Das homogene Reaktionsgemisch wird bis zum Erhalt eines konstanten NCO-Wertes gerührt. Anschließend kann gegebenenfalls unreagiertes Polyisocyanat durch kontinuierliche Destillation entfernt werden.

Unter einem kontinuierlichem Destillationsverfahren im Sinne der Erfindung wird ein Verfahren verstanden, bei dem nur eine jeweilige Teilmenge des Prepolymers aus dem zuvor beschriebenen Verfahrensschritt kurzzeitig einer erhöhten Temperatur ausgesetzt wird, während die noch nicht im Destillationsprozess befindliche Menge bei einer deutlich niedrigeren Temperatur verbleibt. Als erhöhte Temperatur ist dabei die zur Verdampfung der flüchtigen Bestandteile bei einem entsprechend gewählten Druck zu verstehen.

Bevorzugt wird die Destillation bei einer Temperatur von weniger als 170°C, besonders bevorzugt 110 bis 170°C, ganz besonders bevorzugt 125 bis 145°C und bei Drücken von weniger als 20 mbar, besonders bevorzugt weniger als 10 mbar, ganz besonders bevorzugt bei 0,05 bis 5 mbar durchgeführt.

Bevorzugt beträgt die Temperatur der noch nicht im Destillationsprozess befindliche Menge der prepolymerhaltigen Reaktionsmischung 0 bis 60°C, besonders bevorzugt 15 bis 40°C und ganz besonders bevorzugt 20 bis 40°C.

In einer bevorzugten Ausführungsform der Erfindung beträgt der Temperaturunterschied zwischen der Destillationstemperatur und der Temperatur der noch nicht im Destillationsprozess befindlichen Menge der prepolymerhaltigen Reaktionsmischung mindestens 5°C, besonders bevorzugt mindestens 15°C, ganz besonders bevorzugt 15 bis 40°C.

Bevorzugt wird die Destillation mit solch einer Geschwindigkeit geführt, dass ein Volumeninkrement der zu destillierenden prepolymerhaltigen Reaktionsmischung weniger als 10 min besonders bevorzugt weniger als 5 min der Destillationstemperatur ausgesetzt wird und anschließend gegebenenfalls durch aktive Kühlung wieder auf die Ausgangstemperatur der prepolymerhaltigen Reaktionsmischung vor der Destillation gebracht wird. Bevorzugt ist die dabei durchlaufene Temperaturbelastung derart, dass die Temperatur der Reaktionsmischung vor der Destillation bzw. des Prepolymers nach der Destillation gegenüber der angewandten Destillationstemperatur mindestens 5°C, besonders bevorzugt mindestens 15°C, ganz besonders bevorzugt 15 bis 40°C höher ist.

Bevorzugte kontinuierliche Destillationstechniken sind die Kurzweg-, Fallfilm- und/oder Dünnschichtdestillation (siehe hierzu beispielsweise Chemische Technik, Wiley-VCH, Band 1, 5. Auflage, Seiten 333-334).

Fallfilmverdampfer bestehen aus einem stehenden Bündel langer Rohre, in denen die zu verdampfende Flüssigkeit oben aufgegeben wird und als Film hinunterströmt. Im Mantelraum erfolgt die Beheizung durch Dampf. In den Rohren bilden sich Dampfblasen, die mit der Flüssigkeit abwärts strömen und für turbulente Bedingungen sorgen. Dampf und Flüssigkeit trennen sich am unteren Ende in einem Abscheidegefäß.

Dünnschichtverdampfer sind geeignete Apparate zur Verdampfung temperaturempfindlicher Stoffe, die nur kurzzeitig thermisch belastet werden dürfen. Die zu verdampfende Flüssigkeit wird oben in ein Rohr mit Mantelbeheizung aufgegeben. Sie strömt dort als Film herunter. Im Innern des Rohres rotiert ein an einer Welle aufgehängter Wischer und sorgt für eine konstante Filmdicke. Bevorzugt wird als kontinuierliche Destillationstechnik die Dünnschichtdestillation mit den vorstehend genannten Parametern eingesetzt.

Bevorzugt beträgt das Äquivalentverhältnis der NCO-Gruppen des Polyisocyanats zu den OH-Gruppen des Polyols bei der Umsetzung 10:1 bis 2:1, besonders bevorzugt 7:1 bis 2:1.

Als Reaktionstemperatur werden 0°C bis 250°C, vorzugsweise 20°C bis 140°C, ganz besonders bevorzugt 40°C bis 100°C gewählt.

Selbstverständlich kann das erfindungsgemäße Verfahren auch in Gegenwart von Lösungsmitteln wie Aromaten, chlorierten Aromaten, Ester oder chlorierten Kohlenwasserstoffen durchgeführt werden.

Zur Beschleunigung der Urethanisierung können die an sich bekannten Katalysatoren wie Organometallverbindungen, Amine (z.B. tertiäre Amine) oder Metallverbindungen wie Bleioctoat, Quecksilbersuccinat, Zinktriflat, Zinnoctoat oder Dibutylzinndilaurat verwendet werden. Falls Katalysatoren mit verwendet werden, werden diese vorzugsweise in Mengen von 0,001 bis 5 Gew.-%, insbesondere 0,002 bis 2 Gew.-%, bezogen auf die Gesamtmenge der umzusetzenden Polyisocyanate und Polyole, zugesetzt.

### Bevorzugte Substituentenbedeutungen in den Formeln (I) und (III)

Bevorzugt werden Verbindungen der Formel (I) und (III) zur Verfügung gestellt, wobei jeweils gilt:
R stellt Methylen (-CH₂-), Ethylen (-CH₂CH₂-), Propylen (-CH₂CH₂CH₂-), Isophorylen, 4,4'-Dicyclohexylmethylen, Bis(cyclohexylen), 4,4'-Bisphenylen, o-, m- oder p-Tolylen, oder Hexylen (insbesondere -CH₂CH₂CH₂CH₂CH₂CH₂-), und besonders bevorzugt n-Hexylen, dar;
R¹ stellt Methylen (-CH₂-) oder Propylen (inbesondere n-Propylen -CH₂CH₂CH₂-), besonders bevorzugt n-Propylen, dar;
R² und R³ stellen jeweils unabhängig voneinander -Methyl oder -Ethyl, bevorzugt -Ethyl, dar und
n stellt eine ganze Zahl von 0 bis 2 dar.

Besonders bevorzugt werden Verbindungen der Formel (I) und/oder (III) bereitgestellt, wobei jeweils gilt:
R stellt Isophorylen, 4,4'-Dicyclohexylmethylen, Bis(cyclohexylen), Bisphenylen, Tolylen oder n-Hexylen dar;
R¹ stellt n-Propylen dar;
R² und R³ stellen jeweils unabhängig voneinander -Methyl oder -Ethyl dar; und
n stellt eine ganze Zahl von 0 bis 2 dar.

Ganz besonders bevorzugt werden Verbindungen der Formel (III) bereitgestellt, bei denen R Isophorylen, Tolylen oder n-Hexylen ist, R¹ n-Propylen ist, R² und R³ -Methyl sind und n=0 ist.

Die erfindungsgemäßen Verbindungen der Formel (I) sind als Bindemittel für Beschichtungs-, Kleb- und/oder Dichtstoffe geeignet.

Die erfindungsgemäßen Verbindungen der Formel (I) besitzen (bei 23 °C) Viskositäten im Bereich von 100 bis 1.000.000 mPa·s, bevorzugt 1.000 bis 500.000 mPa·s, besonders bevorzugt 5.000 bis 300.000 mPa·s.

Die erfindungsgemäßen Verbindungen der Formel (I) sind aufgrund der vorliegenden Acylharnstoff-Gruppe niedriger in ihrer Viskosität gegenüber den analogen Produkten, die eine Harnstoff gruppe aufweisen. Dies führt zu, wie dem Fachmann bekannt, einer verbesserten Handhabbarkeit bzw. Weiterverarbeitung zu pigmentierten Beschichtungen bzw. besseren Einarbeitung von Füllstoffen wie z.B. Kreiden für die Formulierung von Kleb- oder Dichtstoffen.

### Verfahren zur Herstellung der Verbindungen der Formel (I)

Die erfindungsgemäßen Verbindungen der Formel (I) können nach dem folgenden zweistufigen Verfahren hergestellt werden:

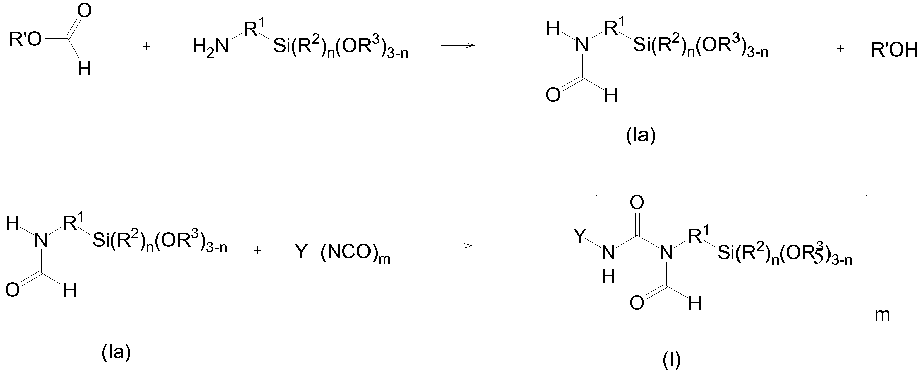

Zunächst wird bevorzugt ein Überschuss des Ameisensäurealkylesters R'O-CHO zum Amin H₂N-R¹-Si(R²)ₙ(OR³)₃₋ₙ getropft, wobei R' bevorzugt eine Alkylgruppe mit 1 bis 4 Kohlenstoffatomen darstellt. Besonders bevorzugt ist als Ameisensäurealkylester R'O-CHO, Methylformiat oder Ethylformiat. Bevorzugt wird 1 Mol Amin mit einem Überschuss von 1,01 bis 6 Mol Ameisensäurealkylester R'O-CHO, besonders bevorzugt 1,05 bis 4 Mol, bei der Siedetemperatur des Ameisensäurealkylesters umgesetzt. Nach beendeter Reaktion wird der überschüssige Ameisensäurealkylester R'O-CHO und der entstandene Alkohol R'-OH mittels Dünnschicht-Destillation abdestilliert und das entstanden Produkt (Ia) gegebenenfalls abfiltriert.

Im Anschluss wird die Verbindung der Formel (Ia) mit
Y-(NCO)ₘ, bevorzugt unter inerten Bedingungen, bei Temperaturen von 20 bis 200 °C, vorzugsweise 40 bis 160 °C, umgesetzt. Dabei werden die beiden Komponenten in einem Äquivalentverhältnis von Isocyanatgruppen zu Formamidgruppen von mindestens 1 : 10 bis höchstens 40 : 1, bevorzugt von 1 : 5 bis höchstens 30 : 1 und besonders bevorzugt von 1 : 2 bis höchstens 25 : 1 eingesetzt. Die Umsetzung kann in Lösung oder lösemittelfrei in Substanz ausgeführt werden.

Die Herstellung der Verbindungen mit der Formel (I) kann ohne den Einsatz von Katalysatoren durchgeführt werden. Gegebenenfalls können zur Beschleunigung der Umsetzung aber auch bekannte Katalysatoren hinzugegeben werden. Beispielsweise können tert. Amine, wie z. B. Triethylamin, Tributylamin, Dimethylbenzylamin, Diethylbenzylamin, Pyridin, Methylpyridin, Dicyclohexylmethylamin, Dimethyl-cyclohexylamin, N,N,N',N'-Tetramethyldiaminodiethylether, Bis-(dimethylaminopropyl)-harnstoff, N-Methyl- bzw. N- Ethylmorpholin, N-Cocomorpholin, N-Cyclohexylmorpholin, N,N,N',N'-Tetramethylethylendiamin, N,N,N',N'-Tetramethy-1,3-butandiamin, N,N,N',N'-Tetramethyl-1,6-hexandiamin, Pentamethyldiethylentriamin, N-Methylpiperidin, N-Dimethyl-aminoethylpiperidin, N,N'-Dimethylpiperazin, N-Methyl-N'-dimethylaminopiperazin, 1,2-Dimethylimidazol, 2-Methylimidazol, N,N-Dimethylimidazol-ß-phenylethylamin, 1,4-Diazabicyclo-(2,2,2)-octan (DABCO) und Bis-(N,N- dimethylaminoethyl)adipat, Amidine, wie z. B. 1,5-Diazabicyclo[4.3.0]nonen (DBN), 1,8-Diaza- bicyclo(5.4.0)undecen-7 (DBU) und 2,3-Dimethyl-3,4,5,6-tetrahydropyrimidin, Alkanolaminverbindungen, wie z. B. Triethanolamin, Triisopropanolamin, N-Methyldiethanolamin, N- Ethyldiethanolamin, Dimethylaminoethanol und 2-(N,N-Dimethylaminoethoxy)ethanol, N,N',N"- Tris-(dialkylaminoalkyl)hexahydrotriazine, wie z. B. N,N',N"-Tris-(dimethylaminopropyl)-s-hexa-hydrotriazin, Bis(dimethylaminoethyl)ether sowie Metallsalze, wie z. B. anorganische und/oder organische Verbindungen des Eisens, Bleis, Wismuths, Zinks, und/oder Zinns in üblichen Oxidationsstufen des Metalls, beispielsweise Eisen(II)-chlorid, Eisen(III)-chlorid, Wismut(III)-2-ethyl-hexanoat, Wismut(III)-octoat, Wismut(III)-neodecanoat, Zinkchlorid, Zink-2-ethylcaproat, Zink(II)trifluoromethansulfonat (Zinktriflat), Zinn(II)-octoat, Zinn(II)-ethylcaproat, Zinn(II)-palmitat, Dibutylzinn(IV)-dilaurat (DBTL), Dibutylzinn(IV)-dichlorid oder Bleioctoat, eingesetzt werden.

Bevorzugte einzusetzende Katalysatoren sind tertiäre Amine, Amidine und Zinnverbindungen bzw. Zinkverbindungen der genannten Art. Besonders bevorzugte Katalysatoren sind 1,4-Diazabicyclo-(2,2,2)-octan (DABCO), 1,5-Diazabicyclo[4.3.0]nonen (DBN), 1,8-Diazabicyclo(5.4.0)undecen-7 (DBU) sowie Dibutylzinn(IV)- dilaurat (DBTL) und Zink(II)trifluoromethansulfonat (Zinktriflat).

Die oben beispielhaft genannten Katalysatoren können bei der Umsetzung einzeln oder in Form beliebiger Mischungen eingesetzt werden und kommen dabei, falls überhaupt, in Mengen von 0,001 bis 1,0 Gew.-%, bevorzugt 0,01 bis 0,5 Gew.-%, berechnet als Gesamtmenge an eingesetzten Katalysatoren, bezogen auf die Gesamtmenge der verwendeten Ausgangsverbindungen, zum Einsatz.

Der Verlauf der Umsetzung kann durch z. B. titrimetrische Bestimmung des NCO-Gehalts verfolgt werden. Nach Erreichen des angestrebten NCO-Gehalts wird die Reaktion abgebrochen.

Die so hergestellten Verbindungen der Formel (I) stellen klare, praktisch farblose Produkte dar, die in Abhängigkeit vom gewählten Ausgangsmaterialien niedrig- bis hochviskose Flüssigkeiten darstellen und Restgehalte an monomeren Ausgangsdiisocyanaten von weniger als 1,0 Gew.-%, vorzugsweise von weniger als 0,5 Gew.-%, besonders bevorzugt von weniger als 0,3 Gew.-%, bezogen auf die Gesamtmasse des Reaktionsproduktes, aufweisen.

Eventuell noch nachweisbare NCO-Restgehalte können durch Zugabe von Methanol abgefangen werden.

Um ein vorzeitige Vernetzung der Silangruppen der Verbindungen der Formel (I) während der erfindungsgemäßen Herstellung zu unterbinden, kann der Zusatz von Wasserfängern vorteilhaft sein. Beispielsweise können ortho-Ameisenestern, wie z. B. Triethylorthoformiat, Vinylsilanen, wie z. B. Vinyltrimethoxysilan, oder organischen Phosphaten, wie z. B. Dibutylphosphat, eingesetzt werden. Die Wasserfänger kommen, falls notwendig, in Mengen von bis zu 5 Gew.-%, vorzugsweise bis zu 2 Gew.-%, bezogen auf die Gesamtmenge der Ausgangsmaterialien, zum Einsatz.

Falls Katalysatoren und/oder Wasserfänger eingesetzt werden, können diese den Ausgangsverbindungen bereits vor Beginn der eigentlichen Umsetzung zugesetzt werden. Es ist aber auch möglich, diese Hilfsmittel dem Reaktionsgemisch zu einem beliebigen Zeitpunkt während der Umsetzung zuzusetzen.

In einer bevorzugten Ausführungsform finden die hier beschriebenen Verfahren unter Schutzgasatmosphäre, wie beispielsweise Stickstoff, statt.

Die hier offenbarten silanmodifizierten Polymere der Formel (I) können erfindungsgemäß zur Herstellung von Kleb- und Dichtstoffen, Lacken, Beschichtungen, Schlichten, Tinten und/oder Druckerfarben eingesetzt werden.

Vorteil dieses Verfahrens ist, dass über die eingesetzten Strukturen der Formel Y-(NCO)ₘ die Eigenschaften der silanmodifizierten Polymere der Formel (I) an eine Vielzahl verschiedenster Anwendungen angepasst werden kann.

### Reaktives Einkomponenten-Klebstoffsystem

Erfindungsgemäß werden die Verbindungen der Formel (I) für ein reaktives Einkomponenten-Klebstoffsystem eingesetzt. Das reaktive Einkomponenten-Klebstoffsystem ist dadurch gekennzeichnet, dass es mindestens eine Verbindung der Formel (I) enthält.

Unter Einwirkung von Feuchtigkeit bzw. Wasser erfolgt die Hydrolyse der hydrolysierbaren Reste der Silangruppen und im Anschluss die Vernetzung (Aushärtung) der dabei entstehenden Silanole unter Abspaltung von Wasser.

Dabei können auch Katalysatoren mitverwendet werden, die die Hydrolyse und Kondensation der Silanolgruppen beschleunigen. Derartige Katalysatoren sind einem Fachmann bekannt. Es können beispielsweise Säuren, wie z. B. Schwefelsäure, p-Toluolsulfonsäure, Trifluormethansulfonsäure, Essigsäure, Trifluoressigsäure und Dibutylphosphat, Basen, wie z. B. N-substituierte Amidine, wie 1,5-Diaza- bicyclo[4.3.0]non-5-en (DBN) und 1,5-Diazabicyclo[5.4.0]undec-7-en (DBU), aber auch Metallsalze und -chelate, wie z. B. Tetraisopropyltitanat, Tetrabutyltitanat, Titan(IV)acetylacetonat, Aluminium-tri-sec-butylat, Aluminiumacetylacetonat, Aluminiumtriflat oder Zinntriflat, verwendet werden.

Diese Katalysatoren kommen, falls überhaupt, in Mengen von bis zu 5 Gew.-%, vorzugsweise bis zu 2 Gew.-%, bezogen auf das Gewicht der eingesetzten silanmodifizierten Prepolymere zum Einsatz. In Abhängigkeit von der Art und Menge des eingesetzten Katalysators kann die Aushärtung des aus den erfindungsgemäßen Verbindungen der Formel (I) formulierten Einkomponenten-Klebstoffsystems über einen weiten Temperaturbereich, beispielsweise von -20 bis 200°C, vorzugsweise von 0 bis 180°C, besonders bevorzugt von 20 bis 160°C, erfolgen.

Gegebenenfalls können dem erfindungsgemäßen, reaktiven Einkomponenten-Klebstoffsystem auch beliebige weitere hydrolysierbare Silanverbindungen, wie z. B. Tetramethoxysilan, Tetraethoxysilan, Methyltrimethoxysilan, Methyltriethoxysilan, Ethyltriethoxysilan, Isobutyltrimethoxysilan, Isobutyltriethoxysilan, Octyltriethoxysilan, Octyltrimethoxysilan, (3-Glycidyloxypropyl)-methyldiethoxysilan, (3-Glycidyloxypropyl)trimethoxysilan, Phenyltrimethoxysilan, Phenyltriethoxysilan oder silanfunktionelle Copolymerisate der in der US 4 499 150 genannten Art, oder Gemische solcher Silanverbindungen als Reaktionspartner zugesetzt werden.

Ebenso kann das reaktive Einkomponenten-Klebstoffsystem der Erfindung gegebenenfalls weitere Additive und/oder Hilfsstoffe enthalten, die im Stand der Technik bekannt sind. Hier sind z. B. Pigmente, Antioxidantien, Wasserfänger, Füllstoffe, Slip-Additive, Verlaufsmittel, Rheologie-Additive, Schaumstabilisatoren, Hydrophobierungsmittel, Luftporenbildner, klebverstärkende Additive (Haftvermittler), Compoundierungsmittel, Weichmacher, Alterungsschutzmittel, Flammschutzmittel und/oder UV-Stabilisatoren zu nennen.

Als geeignete Füllstoffe seien beispielhaft Ruß, Fällungskieselsäuren, pyrogene Kieselsäuren, mineralische Kreiden und Fällungskreiden genannt. Als geeignete Weichmacher seien beispielhaft Phthalsäureester, Adipinsäureester, Alkylsulfonsäureester des Phenols, Phosphorsäureester oder auch höhermolekulare Polypropylenglykole genannt.

Als Wasserfänger seien insbesondere Alkoxysilylverbindungen genannt wie Vinyltrimethoxysilan, Methyltrimethoxysilan, i-Butyltrimethoxysilan, Hexadecyltrimethoxysilan.

Als Haftvermittler werden die bekannten funktionellen Silane eingesetzt wie beispielsweise Aminosilane der vorstehend genannten Art aber auch N-Aminoethyl-3-aminopropyl-trimethoxy und/oder N-Aminoethyl-3-aminopropylmethyldimethoxysilan, Epoxysilane und/oder Mercaptosilane.

Neben der Verwendung als Einkomponenten-Klebestoffsystem können die erfindungsgemäßen Verbindungen der Formel (I) auch üblichen Einkomponenten- und/oder Zweikomponenten-Polyurethan-Klebstoffsystemen, beispielsweise als Additiv, zugemischt werden.

Wird das erfindungsgemäße, reaktive Einkomponenten-Klebstoffsystem, wie oben beschrieben, zuvor auf den zu verklebenden Substraten aufgebracht, kommt durch die oben beschriebene Vernetzung eine dauerhafte Verklebung bzw. Abdichtung der Substrate zu Stande.

Gegebenenfalls kann es notwendig sein, dass die Oberflächen der zu verklebenden Substrate durch ein physikalisches, chemisches und/oder physikalisch-chemisches Verfahren vorbehandelt werden. Hier ist beispielsweise das Aufbringen eines Primers oder einer Haftvermittlerzusammensetzung vorteilhaft, aber erfindungsgemäß nicht unbedingt notwendig. Sie kann daher in einer Ausführungsform auch unterbleiben.

### Substrate

Geeignete Substrate, die zur Verklebung und/oder Abdichtung über das erfindungsgemäße, reaktive Einkomponenten-Klebstoffsystem geeignet sind, sind Metalle, Glas, Holz, Beton, Stein, Keramik, Textil und/oder Kunststoffe. Die zu verklebenden Substrate können gleich oder verschieden sein.

In einer bevorzugten Ausführungsform wird das erfindungsgemäße, reaktive Einkomponenten-Klebstoffsystem zur Verklebung und/oder Abdichtung von Metallen, Glas und/oder Kunststoffen eingesetzt.

Geeignete Metallsubstrate können im Allgemeinen aus allen auf dem Gebiet üblichen Metallen bzw. Metalllegierungen gefertigt werden. Bevorzugt kommen Metalle, wie zum Beispiel Aluminium, Edelstahl, Stahl, Titan, eisenhaltige Metalle und Legierungen zum Einsatz. Die zu verklebenden Substrate können außerdem aus unterschiedlichen Metallen aufgebaut sein.

Die zu verklebenden Kunststoffsubstrate sind beispielsweise Polycarbonate (PC), Polyamide, Polyvinylchlorid, Polyurethane, Polyvinylacetat, Polyacrylate bzw. Polymethacrylate, Polyethylen, Polystyrol, Polypropylen und/oder Polyester, wie z.B. Polybutylenterephthalat (PBT) und/oder Polyethylenterephthalat (PET).

Die Substrate können außerdem lackiert oder bedruckt sein.

Weiterhin können die zu verklebenden Substrate jede beliebige Form besitzen, die für die jeweilige Anwendung des erhaltenen Verbundkörpers notwendig ist. In der einfachsten Form sind die Substrate eben. Es können aber ebenso auch dreidimensionale Substrate mit dem erfindungsgemäßen, reaktiven Einkomponenten-Klebstoffsystem verklebt werden.

### Verbundkörper

Ebenso wird erfindungsgemäß ein Verbundkörper bereitgestellt, der durch das erfindungsgemäße, reaktive Einkomponenten-Klebstoffsystem, wie oben definiert, verbunden ist.

### Experimenteller Teil

Die nachfolgenden Beispiele dienen zur Verdeutlichung der vorliegenden Erfindung, sollen aber keinesfalls als Einschränkung des Schutzbereichs verstanden werden.

Alle Prozentangaben beziehen sich, soweit nichts anderes angegeben wird, auf das Gewicht.

Die Bestimmung der NCO-Gehalte erfolgte titrimetrisch nach DIN EN ISO 11909.

OH-Zahlen wurden titrimetrisch nach DIN 53240-2: 2007-11, Säure-Zahlen nach DIN 3682 5 bestimmt. Die angegebenen OH-Gehalte wurden aus den analytisch ermittelten OH-Zahlen errechnet.

Die Rest-Monomeren Gehalte wurden nach DIN EN ISO 10283 gaschromatographisch mit internem Standard gemessen.

Molekulargewichte wurden durch Gelpermationschromatographie in Anlehnung an DIN 55672-1 (Gelpermeationschromatographie (GPC) - Teil 1: Tetrahydrofuran (THF) als Elutionsmittel) gegen Polystyrolstandards ermittelt, mit der Änderung, dass mit einer Flußrate von 0,6 ml/min statt 1,0 ml/min gearbeitet wurde.

Sämtliche Viskositätsmessungen erfolgten mit einem Physica MCR 51 Rheometer der Fa. Anton Paar Germany GmbH (DE) nach DIN EN ISO 3219.

### Synthese der silanmodifizierten Formamide mit der Formel (Ia):

### Beispiel 1: N-(3-Trimethoxysilylpropyl)formamid

In einem Kolben mit Thermometer, KPG-Rührer, Rückflusskühler und Tropftrichter werden unter Stickstoffatmosphäre bei Raumtemperatur 1075,8 g (6 mol) 3-Aminopropyltrimethoxysilan vorgelegt. Unter Rühren werden 378,6 g (6,3 mol) Methylformiat zugetropft, so dass 50°C nicht überschritten werden. Nach Abklingen der Exothermie wird 4 Stunden bei Raumtemperatur nachgerührt und anschließend unter reduziertem Druck (0,1 mbar bei 50°C) das überschüssige Methylformiat und der entstandene Methylalkohol abdestilliert. Man erhält eine farblose Flüssigkeit mit einer Viskosität von 11 mPa·s bei 23°C.

### Beispiel 2: N-(3-Methyldimethoxysilylpropyl)formamid

In einem Kolben mit Thermometer, KPG-Rührer, Rückflusskühler und Tropftrichter werden unter Stickstoffatmosphäre bei Raumtemperatur 99,6 g (0,6 mol) 3-Aminopropylmethyldimethoxysilan vorgelegt. Unter Rühren werden 40,3 g (0,67 mol) Methylformiat zugetropft, so dass 50°C nicht überschritten werden. Nach Abklingen der Exothermie werden 4 Stunden bei Raumtemperatur nachgerührt und anschließend unter reduziertem Druck (0,1 mbar bei 50°C) das überschüssige Methylformiat und der entstandene Methylalkohol abdestilliert. Man erhält eine farblose Flüssigkeit.

### Beispiel 3: N-(3-Triethoxysilylpropyl)formamid

In einem Kolben mit Thermometer, KPG-Rührer, Rückflusskühler und Tropftrichter werden unter Stickstoffatmosphäre bei Raumtemperatur 221,4 g (1 mol) 3-Aminopropyltriethoxysilan vorgelegt. Unter Rühren werden 77,8 g (1,05 mol) Ethylformiat zugetropft, so dass 50°C nicht überschritten werden. Nach Abklingen der Exothermie wird 4 Stunden bei Raumtemperatur nachgerührt und anschließend unter reduziertem Druck (0,1 mbar bei 80°C) das überschüssige Ethylformiat und der entstandene Ethylalkohol abdestilliert. Man erhält eine farblose Flüssigkeit mit einer Viskosität von 13 mPa·s bei 23°C.

### Beispiel 4: N-(3-Methyldiethoxysilylpropyl)formamid

In einem Kolben mit Thermometer, KPG-Rührer, Rückflusskühler und Tropftrichter werden unter Stickstoffatmosphäre bei Raumtemperatur 497,9 g (2,6 mol) 3-Aminopropylmethyldiethoxysilan vorgelegt. Unter Rühren werden 212,1 g (2,8 mol) Ethylformiat zugetropft, so dass 50°C nicht überschritten werden. Nach Abklingen der Exothermie wird 4 Stunden bei Raumtemperatur nachgerührt und anschließend unter reduziertem Druck (0,1 mbar bei 80°C) das überschüssige Ethylformiat und der entstandene Ethylalkohol abdestilliert. Man erhält eine farblose Flüssigkeit mit einer Viskosität 12 mPas bei 23°C.

### Synthese der silanmodifizierten Verbindungen mit der allgemeinen Formel (I):

### Beispiel 5:

In einen Kolben mit Thermometer, KPG-Rührer, Rückflusskühler und Tropftrichter werden unter Stickstoffatmosphäre 154,5 g (0,915 mol) HDI und 25 mg (30 ppm) Zink(II)triflat bei 60°C vorgelegt. Anschließen werden 469,5 g eines Polypropylenglykols (OH-Zahl: 112 mgKOH/g) und 201 g eines Polyethers (OH-Zahl: 52 mgKOH/g) zugetropft. Die Reaktionsmischung wird bei 60°C gerührt bis ein konstanter Isocyanatgehalt (3,0 Gew.-%) erreicht wird. Im Anschluss werden 142,8 g (0,69 mol) N-(3-Trimethoxysilylpropyl)formamid (aus Beispiel 1) zudosiert und die Reaktionsmischung bei 80°C gerührt bis titrimetrisch kein Isocyanatgehalt mehr feststellbar ist. Zur Stabilisierung des erhaltenen silanterminierten Prepolymers werden 32 mg Dibutylphosphat und als Wasserfänger 2,14 g Vinyltrimethoxysilan hinzugegeben. Das erhaltene Bindemittel ist eine klare farblose Masse und hat eine Viskosität von 21.000 mPa·s bei 23°C.

### Beispiel 6: (Vergleichsbeispiel zu Beispiel 5)

In einen Kolben mit Thermometer, KPG-Rührer, Rückflusskühler und Tropftrichter werden unter Stickstoffatmosphäre 154,5 g (0,915 mol) HDI und 25 mg (30 ppm) DBTL (Dibutylzinndilaurat) bei 60°C vorgelegt. Anschließen werden 469,5 g eines Polypropylenglykols (OH-Zahl: 112 mgKOH/g) und 201 g eines Polyethers (OH-Zahl: 52 mgKOH/g) zugetropft. Die Reaktionsmischung wird bei 60°C gerührt bis ein konstanter Isocyanatgehalt (3,0 Gew%) erreicht wird. Im Anschluss werden 123,7 g (0,69 mol) 3-Aminopropyltrimethoxysilan zudosiert und die Reaktionsmischung bei 80°C gerührt bis titrimetrisch kein Isocyanatgehalt mehr feststellbar ist. Zur Stabilisierung des erhaltenen silanterminierten Prepolymers werden 32 mg Dibutylphosphat und als Wasserfänger 2,14 g Vinyltrimethoxysilan hinzugegeben. Das erhaltene Bindemittel ist eine trübe weißliche Masse und hat eine Viskosität von 100.000 mPa·s bei 23°C.

### Beispiel 7:

In einen Kolben mit Thermometer, KPG-Rührer, Rückflusskühler und Tropftrichter werden unter Stickstoffatmosphäre 519,0 g Desmodur^{®} N 75 BA (Polyisocyanat (Biuret auf HDI-Basis 75%ig in Butylacetat) von Bayer MaterialScience AG; Isocyanatgehalt 16,5 Gew.-%) mit 50 ppm DABCO bei 80°C vorgelegt. Unter Rühren werden 581,0 g (2,8 mol) N-(3-Trimethoxysilylpropyl)formamid (aus Beispiel 1) zugetropft. Die Reaktionsmischung wird nach erfolgter Zugabe bei 80°C gerührt bis titrimetrisch kein Isocyanatgehalt mehr feststellbar ist. Das erhaltene Bindemittel hat eine Viskosität von 6.240 mPa·s bei 23°C.

Zur weiteren Verarbeitung wird das Bindemittel auf einen Festkörperanteil von 50% mit Butylacetat eingestellt und 0,25% Lupragen N 700 (1,8-Diazabicyclo-5,4,0-undecen-7) der Firma BASF zugegeben und auf Glasplatten mit einer Schichtdicke (nass) von 50µm gerakelt. Nach einer Trocknungszeit von 4h bei 23°C und einer relativen Luftfeuchtigkeit von 50% ist die Beschichtung grifftrocken und zeigt nach 4 Tagen gute Lösemittelbeständigkeiten gegenüber Xylol, 1-Methoxypropylacetat-2, Ethylacetat und Aceton.

### Beispiel 8:

In einen Kolben mit Thermometer, KPG-Rührer, Rückflusskühler und Tropftrichter werden unter Stickstoffatmosphäre 578,0 g Desmodur^{®} L75 (Polyisocyanat auf TDI-Basis 75%ig in Ethylacetat) von Bayer MaterialScience AG; Isocyanatgehalt 13,3 Gew%) mit 50 ppm DABCO bei 80°C vorgelegt. Unter Rühren werden 522,0 g (2,5 mol) N-(3-Trimethoxysilylpropyl)formamid (aus Beispiel 1) zugetropft. Die Reaktionsmischung wird nach erfolgter Zugabe bei 80°C gerührt bis titrimetrisch kein Isocyanatgehalt mehr feststellbar ist. Das erhaltene Bindemittel hat eine Viskosität von 92.000 mPa·s bei 23°C.

Zur weiteren Verarbeitung wird das Bindemittel auf einen Festkörperanteil von 50% mit Ethylacetat eingestellt und 0,25% Lupragen^{®} N 700 (1,8-Diazabicyclo-5,4,0-undecen-7) der Firma BASF SE zugegeben und auf Glasplatten mit einer Schichtdicke (nass) von 50µm gerakelt. Nach einer Trocknungszeit von 4h bei 23°C und einer relativen Luftfeuchtigkeit von 50% ist die Beschichtung grifftrocken und zeigt nach 4 Tagen gute Lösemittelbeständigkeiten gegenüber Xylol, 1-Methoxypropylacetat-2, Ethylacetat und Aceton.

### Beispiel 9:

In einen Kolben mit Thermometer, KPG-Rührer, Rückflusskühler und Tropftrichter werden unter Stickstoffatmosphäre 201,6 g (1,2 mol) HDI bei 80°C vorgelegt und 87,6 g (0,6 mol) 2,2,4-Trimethylpentan-1,3-diol portionsweise zugegeben. Anschließend werden 346 g Butylacetat als Lösungsmittel und 52 mg Triethylamin als Katalysator zudosiert. Nach Erreichen eines konstanten Isocyanatgehalts (8,2 Gew%) werden 248,4 g (1,2 mol) N-(3-Trimethoxysilylpropyl)formamid (aus Beispiel 1) hinzugetropft und der Ansatz bei 80°C gerührt bis titrimetrisch kein Isocyanatgehalt mehr feststellbar ist. Das erhaltene klare Bindemittel hat eine Viskosität von 41 mPa·s bei einem Festkörpergehalt von 50%.

Zur weiteren Verarbeitung wird das Bindemittel mit 0,25% Lupragen^{®} N 700 (1,8-Diazabicyclo-5,4,0-undecen-7) der Firma BASF SE versetzt und auf Glasplatten mit einer Schichtdicke (nass) von 50µm gerakelt. Nach einer Trocknungszeit von 4h bei 23°C und einer relativen Luftfeuchtigkeit von 50% ist die Beschichtung grifftrocken und zeigt nach 4 Tagen gute Lösemittelbeständigkeiten gegenüber Xylol, 1-Methoxypropylacetat-2, Ethylacetat und Aceton.

### Beispiel 10: (Vergleichsbeispiel zu Beispiel 9)

In einen Kolben mit Thermometer, KPG-Rührer, Rückflusskühler und Tropftrichter werden unter Stickstoffatmosphäre 201,6 g (1,2 mol) HDI bei 80°C vorgelegt und 87,6 g (0,6 mol) 2,2,4-Trimethylpentan-1,3-diol portionsweise zugegeben. Anschließend werden 346 g Butylacetat als Lösungsmittel und 52 mg Triethylamin als Katalysator zudosiert. Nach Erreichen eines konstanten Isocyanatgehalts (8,2 Gew%) werden 215,1 g (1,2 mol) 3-Aminopropyltrimethoxysilan hinzugetropft. Kurz nach Beginn der Zugabe wird die Reaktionsmischung trüb und der Ansatz verfestigt sich bei Raumtemperatur trotz weiterer Verdünnung bis auf unter 50% Festkörpergehalt. Eine Weiterverarbeitung des Ansatzes als Lackbindemittel ist nicht möglich.

### Anwendungstechnische Beispiele für Kleb- und Dichtstoffe

Zur Beurteilung der anwendungstechnischen Eigenschaften Prepolymers aus Beispiel 9 wird dieses in folgender Formulierung verarbeitet:

| | **Einsatzmenge in Gew.-%** |
|---|---|
| Polymer | 31,34 |
| Füllstoff (Socal U₁S₂) | 47,01 |
| Weichmacher (Jayflex DINP) | 18,80 |
| Trocknungsmittel (Dynasylan VTMO) | 1,88 |
| Haftvermittler (Dynasylan 1146) | 0,94 |
| Katalysator (Lupragen N 700) | 0,03 |

Zur Herstellung der Formulierung wird das Bindemittel mit Füllstoff (Socal^{®} U1S2 der Fa. Solvay), Weichmacher (Jayflex^{™} DINP der Fa. Exxon) und Trocknungsmittel (Dynasylan^{®} VTMO der Fa. Evonik) versetzt und in einem Vakuumdissolver mit Wandabstreifer bei 3000 U/min vermischt. Anschließend wird der Haftvermittler (Dynasylan^{®} 1146 der Fa. Evonik) hinzugefügt und innerhalb von 5 min bei 1000 U/min untergerührt. Zuletzt wird der Katalysator (Lupragen^{®} N700 der Fa. BASF SE) bei 1000 U/min eingerührt und abschließend die fertige Mischung im Vakuum entlüftet.

Zur Messung der physikalischen Eigenschaften werden sowohl Membranen von 2 mm Dicke, als auch Probenkörper auf Glassubstrat gemäß DIN EN ISO 11600 hergestellt. Die Prüfung der shore-Härte erfolgt an den Membranen gemäß DIN 53505. Der Modulus bei 50 % Dehnung wird entsprechend DIN EN ISO 11600 bei 23 °C gemessen.

Folgende Ergebnisse wurden erhalten:

| | Bsp. 15 (Prepolymer aus Bsp. 9) |
|---|---|
| Shore A Härte | 52 |
| 50 %-Modulus [N/mm²] | 2,4 |
| Filmtrocknungszeit, 100µm [min] | 150 |
| Reißdehnung [%] | 64,6 |

## Patentansprüche

1. Verbindung der allgemeinen Formel (I): 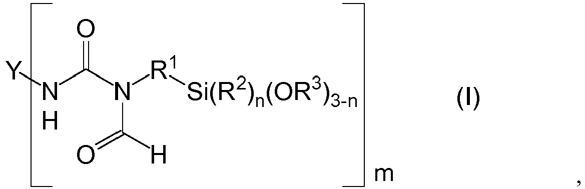 wobei in der Formel (I) gilt:
Y stellt einen m-wertigen Molekülrest dar, der eine um m NCO-Radikale reduzierte Struktureinheit eines Monoisocyanats (m=1), Polyisocyanats (m>1) oder eines isocyanatgruppenhaltigen Prepolymers (m=1 bis 20) ist;
R¹ stellt eine mindestens zweiwertige, gegebenenfalls substituierte, lineare oder verzweigte, aliphatische, alizyklische, araliphatische und/oder aromatische Struktureinheit mit 1 bis 12 Kohlenstoffatomen dar, wobei ein oder mehrere nicht benachbarte Methylengruppen jeweils durch O oder S ersetzt sein können;
R² und R³ stellen jeweils unabhängig voneinander eine gegebenenfalls substituierte, lineare oder verzweigte, aliphatische Gruppe mit 1 bis 12 Kohlenstoffatomen dar;
n stellt eine ganze Zahl von 0 bis 2 dar; und
m stellt eine Zahl von 1 bis 20 dar.

2. Verbindung nach Anspruch 1, wobei R² und R³ jeweils unabhängig voneinander - Methyl oder -Ethyl darstellen.

3. Verbindung nach Anspruch 1 oder 2, wobei Y einen Molekülrest darstellt, der eine um m NCO-Radikale reduzierte Struktureinheit eines Monoisocyanats (m=1), Polyisocyanats (m>1 oder eines isocyanatgruppenhaltigen Prepolymers (m=1 bis 20) ist, R¹ -Propyl darstellt, R² und R³ jeweils unabhängig voneinander -Methyl oder -Ethyl darstellen und n eine ganze Zahl von 0 bis 2 darstellt.

4. Verfahren zur Herstellung der Verbindung der Formel (I), umfassend Umsetzung einer Verbindung der Formel (Ia) mit einer Struktureinheit der Formel Y-(NCO)ₘ : 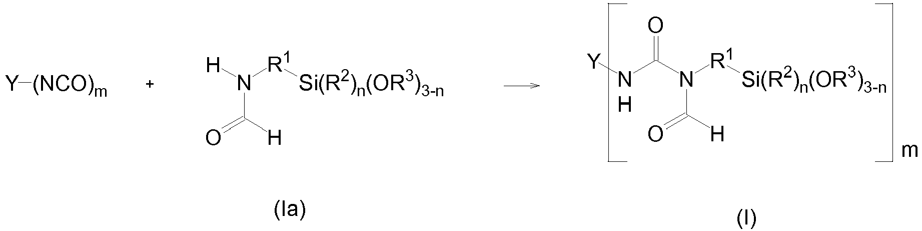 wobei Y, R¹, R², R³, n und m wie in Anspruch 1 definiert sind.

5. Verwendung der Verbindung nach einem der Ansprüche 1 bis 4 zur Herstellung von Kleb- und Dichtstoffen, Lacken, Beschichtungen, Schlichten, Tinten und/oder Druckerfarben.

6. Reaktives Einkomponenten-Klebstoffsystem, umfassend mindestens eine Verbindung nach einem der Ansprüche 1 bis 5.

7. Verwendung des reaktiven Einkomponenten-Klebstoffsystems nach Anspruch 6 zur Verklebung und/oder Abdichtung von Metall, Holz, Holzwerkstoffen, Glas, Leder, Textilien, Kunststoffen, mineralischen Materialien, Kork, Fasern, Beton, Papier, Pappe und Folien.

8. Kit, umfassend das reaktive Einkomponenten-Klebstoffsystem nach Anspruch 6, zur Verklebung und/oder Abdichtung von Metall, Holz, Holzwerkstoffen, Glas, Leder, Textilien, Kunststoffen, mineralischen Materialien, Kork, Fasern, Beton, Papier, Pappe und Folien.

9. Verbundkörper, der durch das reaktive Einkomponenten-Klebstoffsystem nach Anspruch 6 oder durch das Kit nach Anspruch 8 verbunden ist.

10. Reaktives Einkomponenten-Beschichtungssystem, umfassend mindestens eine Verbindung nach einem der Ansprüche 1 bis 5.

11. Verwendung des reaktiven Einkomponenten-Beschichtungssystem nach Anspruch 10 zur Beschichtung von Metall, Holz, Holzwerkstoffen, Glas, Leder, Textilien, Kunststoffen, mineralischen Materialien, Kork, Fasern, Beton, Papier, Pappe und Folien.

12. Kit, umfassend das reaktive Einkomponenten-Beschichtungssystem nach Anspruch 10, zur Beschichtung von Metall, Holz, Holzwerkstoffen, Glas, Leder, Textilien, Kunststoffen, mineralischen Materialien, Kork, Fasern, Beton, Papier, Pappe und Folien.

13. Verbundkörper, der durch das reaktive Einkomponenten-Beschichtungssystem nach Anspruch 10 oder durch das Kit nach Anspruch 12 verbunden ist.

## Claims

1. Compound of the general formula (I): 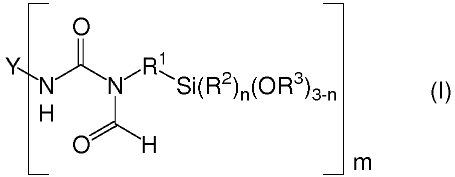 wherein in formula (I):
Y represents an m-valent molecular radical which is a structural unit reduced by m NCO radicals of a monoisocyanate (m = 1), of a polyisocyanate (m > 1) or of an isocyanate-group-containing prepolymer (m = from 1 to 20);
R¹ represents an at least divalent, optionally substituted, linear or branched, aliphatic, alicyclic, araliphatic and/or aromatic structural unit having from 1 to 12 carbon atoms, wherein one or more non-adjacent methylene groups can each be replaced by O or S;
R² and R³ each independently of the other represents an optionally substituted, linear or branched, aliphatic group having from 1 to 12 carbon atoms;
n represents an integer from 0 to 2; and
m represents a number from 1 to 20.

2. Compound according to claim 1, wherein R² and R³ each independently of the other represents methyl or ethyl.

3. Compound according to claim 1 or 2, wherein Y represents a molecular radical which is a structural unit reduced by m NCO radicals of a monoisocyanate (m = 1), of a polyisocyanate (m > 1) or of an isocyanate-group-containing prepolymer (m = from 1 to 20), R¹ represents propyl, R² and R³ each independently of the other represents methyl or ethyl, and n represents an integer from 0 to 2.

4. Process for the preparation of the compound of formula (I), comprising reacting a compound of formula (Ia) with a structural unit of the formula Y-(NCO)ₘ: 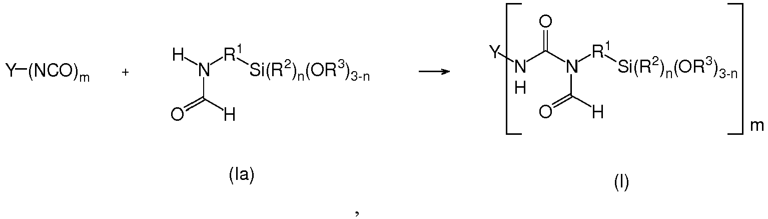 wherein Y, R¹, R², R³, n and m are as defined in claim 1.

5. Use of the compound according to any one of claims 1 to 4 for the production of adhesives and sealing materials, lacquers, coatings, sizes, inks and/or printing inks.

6. Reactive one-component adhesive system comprising at least one compound according to any one of claims 1 to 5.

7. Use of the reactive one-component adhesive system according to claim 6 for the adhesive bonding and/or sealing of metal, wood, wood-based materials, glass, leather, textiles, plastics materials, mineral materials, cork, fibres, concrete, paper, cardboard and films.

8. Kit comprising the reactive one-component adhesive system according to claim 6, for the adhesive bonding and/or sealing of metal, wood, wood-based materials, glass, leather, textiles, plastics materials, mineral materials, cork, fibres, concrete, paper, cardboard and films.

9. Composite bonded by the reactive one-component adhesive system according to claim 6 or by the kit according to claim 8.

10. Reactive one-component coating system comprising at least one compound according to any one of claims 1 to 5.

11. Use of the reactive one-component coating system according to claim 10 for the coating of metal, wood, wood-based materials, glass, leather, textiles, plastics materials, mineral materials, cork, fibres, concrete, paper, cardboard and films.

12. Kit comprising the reactive one-component coating system according to claim 10, for the coating of metal, wood, wood-based materials, glass, leather, textiles, plastics materials, mineral materials, cork, fibres, concrete, paper, cardboard and films.

13. Composite bonded by the reactive one-component coating system according to claim 10 or by the kit according to claim 12.

## Revendications

1. Composé de formule générale (I) : 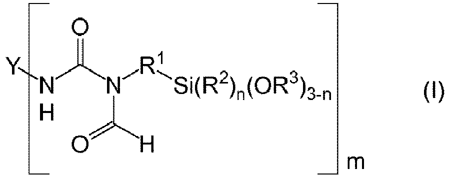 dans laquelle formule (I) :
Y représente un résidu moléculaire qui est une unité structurale, réduite de m radicaux NCO, d'un monoisocyanate (m = 1), d'un polyisocyanate (m > 1) ou d'un prépolymère contenant des groupes isocyanate (m = 1 à 20);
R¹ représente une unité structurale au moins divalente, le cas échéant substituée, linéaire ou ramifiée, aliphatique, alicyclique, araliphatique et/ou aromatique, comprenant 1 à 12 atomes de carbone, un ou plusieurs groupes méthylène non adjacents pouvant être remplacés par O ou S;
R² et R³ représentent, à chaque fois indépendamment l'un de l'autre, un groupe le cas échéant substitué, linéaire ou ramifié, aliphatique, comprenant 1 à 12 atomes de carbone;
n représente un nombre entier de 0 à 2; et
m représente un nombre de 1 à 20.

2. Composé selon la revendication 1, R² et R³ représentant, à chaque fois indépendamment l'un de l'autre, -méthyle ou -éthyle.

3. Composé selon la revendication 1 ou 2, Y représentant un résidu moléculaire qui est une unité structurale, réduite de m radicaux NCO, d'un monoisocyanate (m = 1), d'un polyisocyanate (m > 1) ou d'un prépolymère contenant des groupes isocyanate (m = 1 à 20), R¹ représentant -propyle, R² et R³ représentant, à chaque fois indépendamment l'un de l'autre, -méthyle ou -éthyle et n représentant un nombre entier de 0 à 2.

4. Procédé pour la préparation du composé de formule (I), comprenant la réaction d'un composé de formule (Ia) avec une unité structurale de formule Y-(NCO)ₘ : 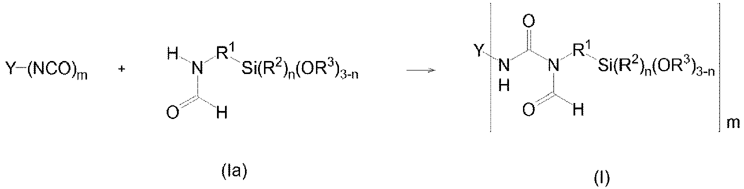 dans lesquelles Y, R¹, R², R³, n et m sont définis comme dans la revendication 1.

5. Utilisation du composé selon l'une quelconque des revendications 1 à 4 pour la préparation d'adhésifs ou de matériaux d'étanchéité, de laques, de revêtements, de colles, d'encres et/ou d'encres d'imprimerie.

6. Système adhésif réactif à un composant, comprenant au moins un composé selon l'une quelconque des revendications 1 à 5.

7. Utilisation du système adhésif réactif à un composant selon la revendication 6 pour le collage et/ou le bouchage de métal, de bois, de matériaux à base de bois, de verre, de cuir, de textiles, de matériaux synthétiques, de matériaux minéraux, de liège, de fibres, de béton, de papier, de carton-pâte et de feuilles.

8. Kit, comprenant le système adhésif réactif à un composant selon la revendication 6 pour le collage et/ou le bouchage de métal, de bois, de matériaux à base de bois, de verre, de cuir, de textiles, de matériaux synthétiques, de matériaux minéraux, de liège, de fibres, de béton, de papier, de carton-pâte et de feuilles.

9. Corps composite, assemblé par le système adhésif réactif à un composant selon la revendication 6 ou par le kit selon la revendication 8.

10. Système de revêtement réactif à un composant, comprenant au moins un composé selon l'une quelconque des revendications 1 à 5.

11. Utilisation du système de revêtement réactif à un composant selon la revendication 10 pour le revêtement de métal, de bois, de matériaux à base de bois, de verre, de cuir, de textiles, de matériaux synthétiques, de matériaux minéraux, de liège, de fibres, de béton, de papier, de carton-pâte et de feuilles.

12. Kit, comprenant le système de revêtement réactif à un composant selon la revendication 10 pour le revêtement de métal, de bois, de matériaux à base de bois, de verre, de cuir, de textiles, de matériaux synthétiques, de matériaux minéraux, de liège, de fibres, de béton, de papier, de carton-pâte et de feuilles.

13. Corps composite, assemblé par le système de revêtement réactif à un composant selon la revendication 10 ou par le kit selon la revendication 12.
